# EUROPÄISCHE PATENTSCHRIFT

(11) **EP 2 455 053 B1**
(45) Veröffentlichungstag und Bekanntmachung des Hinweises auf die Patenterteilung: **04.09.2013**
(21) Anmeldenummer: 10015049.9
(22) Anmeldetag: 26.11.2010
(51) Int. Cl.: A61G 12/00, A61G 13/10

(54) **Tragesystem mit Bedienungshilfe**
Carrier system with operation aid
Système de support doté d'une aide à la commande

(30) Priorität: 17.11.2010 DE 102010051633
(43) Veröffentlichungstag der Anmeldung: 23.05.2012
(73) Patentinhaber: Ondal Medical Systems GmbH, 36088 Hünfeld (DE)
(72) Erfinder: Volkenand, Kai, 36088 Hünfeld (DE); Ickler, Fritz, 36275 Kirchheim (DE); Barton, Joachim, 36039 Fulda (DE); Perplies, Stefan, 36088 Hünfeld (DE)
(74) Vertreter: Graf von Stosch, Andreas

(56) Entgegenhaltungen:
- DE-A1-102009 009 549
- US-B1- 7 770 860

## Beschreibung

### Hintergrund der Erfindung

Die vorliegende Erfindung bezieht sich auf ein Tragesystem zum Tragen bzw. zum Stützen medizin-technischer Geräte in einem Behandlungsraum, wie z.B. in einer Arztpraxis, in einem Operationssaal oder an einer Intensivstation.

Die Erfindung betrifft insbesondere ein Tragesystem, das ein Stativ (z.B. ein Deckenstativ) und mindestens ein Gelenk oder einem Mechanismus umfasst, mit dem das Stativ im Behandlungsraum bewegbar ist. Damit bezieht sich die Erfindung auch auf ein Deckenstativ bzw. ein Auslegersystem zur Aufhängung medizinischer Geräte.

Tragesysteme für medizin-elektrische Endgeräte sind im klinischen Bereich häufig im Einsatz, insbesondere in Krankenhäusern (z.B. in OP-Sälen und an Intensivstationen) und in Arztpraxen. Es sind medizinische Deckenstative bekannt, die zur hängenden Aufnahme von medizinischen Geräten, wie bspw. Versorgungskonsolen, Überwachungsmonitoren, Beatmungssystemen, Spritzenpumpen dienen, und sie werden in Operationssälen oder Intensivräumen für die Unterbringung und medizin-technische Versorgung der für Operationen, die Intensivpflege bzw. Untersuchung eines Patienten notwendigen Systeme verwendet.

US 7 770 860 B1 beschreibt ein solches Tragesystem.

Typischerweise bestehen solche Deckenstative aus mindestens einer vertikalen Säule oder aus einem horizontalen schwenkbaren Arm bzw. Ausleger mit vertikaler Säule, die über eine Drehverbindung drehbar an der Decke befestigt ist, und einer Konsole oder einem Geräteträger, auch Stativkopf genannt, in bzw. auf dem die notwendigen Anschlüsse und Geräte untergebracht sind. Durch den drehbar gelagerten Arm bzw. Ausleger lässt sich der Stativkopf in einem gewünschten Radius verschwenken, wodurch der Zugang zum Patienten erleichtert wird oder eine ergonomische Arbeitsposition eingestellt werden kann. Der Stativkopf kann einen Handgriff aufweisen, der dazu dient, den Stativkopf in eine gewünschte Position zu verschwenken.

Damit der Stativkopf nach dem Verschwenken in seiner gewünschten Endposition bleibt, ist am Drehgelenk oder Drehlager des Arms bzw. Auslegers typischerweise eine Bremse (z.B. eine Feststellbremsen) vorgesehen. Diese kann als Friktionsbremse ausgeführt sein, wobei hier die Bedienkraft groß sein kann. Es kann aber auch mindestens eine Feststellbremse ansteuerbar vorgesehen sein, die in ihrer Ruhestellung die Drehverbindung blockiert. Die ansteuerbaren Feststellbremsen erleichtern auch das gezielte Bewegen des Stativkopfes, da die Feststellungen der Drehverbindungen einzeln gelöst werden können. Wird die Feststellbremse gelöst, lässt sich der Stativkopf per Hand verschwenken. Hierfür kann im Handgriff eine Bedienungshilfe, z.B. in Form eines Betätigungselements bzw. eines Schalters vorgesehen sein.

Ferner kann der Arm bzw. der Ausleger höhenverstellbar sein. Mit anderen Worten kann er zusätzlich oder alternativ zu seiner Schwenkbarkeit in seiner Höhenposition verstellt werden, indem der Arm über einen entsprechenden Mechanismus bspw. motorisch verstellt wird. Auch der Hubantrieb kann über eine Bedienungshilfe, wie z.B. ein Betätigungselement bzw. einen Schalter betätigt werden. Das Betätigungselement kann in einem Handgriff vorgesehen sein.

Sobald ein Deckenstativ- bzw. Tragesystem obiger Art mehrere Betätigungselemente bzw. Schalter aufweist, besteht die Möglichkeit einer Verwechselung oder Unklarheit, über welches Gelenk oder welcher Mechanismus mit welchem Betätigungselement bzw. Schalter bedient wird. Bei komplexeren Deckenstativsystemen, die aus mehreren horizontalen Armen oder Auslegern und einer vertikal höhenverstellbaren Säule zusammengesetzt sind, sind für jede Bremse an den Drehgelenken zwischen den Armen und dem Arm und der Säule und ebenso für den Motor zur Höhenverstellung der Säule Betätigungselemente am Stativkopf vorgesehen. Für das Personal kann es daher sehr schwierig sein, von einer Bedienungshilfe mit einer Vielzahl an vorhandenen Betätigungselementen das jeweilige Betätigungselement zu finden, das die gewünschte Bewegung auslöst bzw. die dazu erforderliche Bremse löst.

Diese Problematik erhöht sich auch erheblich, wenn der Benutzer das Tragesystem oder Stativ bei schwachen bzw. schlechten Lichtverhältnissen bedienen muss, was in der Praxis allerdings relativ häufig vorkommt. Obwohl Patienten an der Intensivstation normalerweise während der Nacht in gedunkeltem Raum schlafen, machen die Ärzte und Krankenschwester natürlich ihre Arbeit weiter. Dazu gehören auch Änderungen der Einstellungen an den medizinischen Geräten bzw. Tragesystemen. Während einer Operation werden die Lichte im OP-Saal für bestimmte Prozeduren (bspw. bei endoskopischen Prozeduren) auch oft gedämpft bzw. "gedimmt", um die Untersuchungsstrahlungen und/oder die Untersuchungsbilder zum besten Vorschein kommen zu lassen, aber das medizinische Personal muss in solchen leicht verdunkelten Lichtverhältnissen auch noch zurechtkommen. Bei einer Notbeleuchtung im Krankenhaus sind die Lichtverhältnisse natürlich auch nicht optimal. Daher ist eine korrekte Handhabung eines solchen Tragesystems mit Schwierigkeiten verbunden.

### Kurze Beschreibung der Erfindung

Der Erfindung liegt die Aufgabe zugrunde, ein Tragesystem bzw. ein Deckenstativ zum Tragen bzw. zum Stützen medizin-technischer Geräte bereitzustellen, das die Handhabung für den Benutzer bzw. für das Bedienungspersonal verbessert.

Diese Aufgabe wird durch ein Tragesystem gemäß Anspruch 1 gelöst. Bevorzugte Ausführungen der Erfindung ergeben sich aus den Merkmalen der abhängigen Ansprüche.

Die Erfindung sieht ein Tragesystem zum Tragen bzw. zum Stützen medizin-technischer Geräte in einem Behandlungsraum vor, welches Tragesystem folgende Merkmale aufweist:
ein Stativ, bspw. ein Deckenstativ, zum Montieren im Behandlungsraum,
mindestens ein Gelenk und/oder mindestens einen Mechanismus, mit dem das Stativ im Behandlungsraum bewegbar ist,
eine Bedienungshilfe zur Betätigung mindestens eines Teils des Tragesystems, um eine Bewegung des Stativs zu steuern, und
Mittel zur Erzeugung einer Rückmeldung bzw. Rückkopplung, die den mit der Bedienungshilfe zu betätigenden Teil des Tragesystems für einen Benutzer identifiziert bzw. kennzeichnet.

Das Mittel zur Erzeugung einer Rückmeldung bzw. Rückkopplung kann als "Rückmeldesystem" verstanden werden und dient dazu, den Benutzer bzw. das Bedienungspersonal über den korrelierenden Teil des Tragesystems und dessen Betätigung mit der Bedienungshilfe zu informieren. In diesem Zusammenhang kann das Rückmeldesystem den zu betätigenden bzw. betätigten Teil des Tragesystems örtlich im System identifizieren oder kennzeichnen. Das Rückmeldesystem erzeugt ein Signal bzw. eine aktive Rückmeldung, sodass der Benutzer Information über den mit der Bedienungshilfe zu betätigenden Teil bekommt und sich vergewissern kann, dass er den richtigen Teil des Tragesystems gerade bedient.

In einer bevorzugten Ausführungsform der Erfindung ist der mindestens eine, mit der Bedienungshilfe zu betätigende Teil des Tragesystems mit dem mindestens einen Gelenk bzw. Mechanismus verbunden. Vorzugsweise umfasst der mindestens eine, mit der Bedienungshilfe zu betätigende Teil des Tragesystems eine Bremse, sodass die Bewegung des Stativs durch Lösen oder Klemmen der Bremse mit der Bedienungshilfe steuerbar ist. Hierzu umfasst die Bedienungshilfe typischerweise eines oder mehrere Betätigungselemente. Da die Bremse intern im Gelenk oder Lager eingebaut ist, kann ein Benutzer gar nicht wahrnehmen, ob sie mit der Bedienungshilfe z.B. gerade gelöst wurde oder nicht. Mit der vorliegenden Erfindung wird der Benutzer allerdings mittels der Rückmeldung gleich aufgeklärt über die Bremse, die über die Bedienungshilfe gerade betätigt oder gelöst wird.

In einer bevorzugten Ausführungsform der Erfindung wird jede Bremse pneumatisch oder elektrisch angesteuert werden. Eine pneumatische Bremse kann entweder als aktive Bremse konzipiert sein, die nur bei Anliegen von Druckluft funktioniert, oder als Ruhebremse, die in ihrer Ruhestellung die Bremsfunktion ausführt und mit Hilfe von Druckluft gelöst wird. Besonders bevorzugt werden allerdings elektrisch bzw. magnetisch ansteuerbare Bremsen in Zusammenhang mit der vorliegenden Erfindung eingesetzt. Die elektromagnetischen Bremsen können als Friktionsbremsen oder als Formschlussbremsen, die eine Weiterbewegung durch Herstellen eines Formschlusses blockieren, konzipiert werden. Elektromagnetische Bremsen haben u. a. den Vorteil, dass sie auch für Bereiche, in denen keine Druckluft zur Verfügung steht, ohne Weiteres zum Einsatz kommen können. Egal welche Art von Bremse eingesetzt wird, erfolgt das Betätigen der Bremse über die Bedienungshilfe durch Schalten eines Betätigungselements. Wird das Betätigungselement betätigt, so wird die Bremse gelöst, so dass das Stativ bzw. der Stativkopf verschwenkt werden kann. In der gewünschten Endposition angelangt, wird die Bremse wieder festgestellt.

Wie oben beschrieben, kann das Tragesystem natürlich auch höhenverstellbar sein, so dass das Tragesystem zusätzlich oder alternativ zu mindestens einer Bremse in einem Drehgelenk mindestens einen Höhenverstellmechanismus (auch Hebe- und Senkvorrichtung genannt) aufweist, der bspw. motorisch verstellt werden kann. Der mindestens eine, mit der Bedienungshilfe zu betätigende Teil des Tragesystems kann daher einen Elektromotor umfassen, so dass höhenverstellbare Bewegung des Stativs durch An- oder Absteuerung des Elektromotors mit der Bedienungshilfe steuerbar ist.

In einer bevorzugten Ausführungsform der Erfindung weist das Tragesystem mehrere Gelenke bzw. mehrere Mechanismen auf, mit denen das Stativ im Behandlungsraum bewegbar ist. Die Bedienungshilfe ist daher zur Betätigung mehrerer Teile des Tragesystems geeignet bzw. gestaltet, um die Bewegung des Stativs zu steuern. Hierzu weist die Bedienungshilfe mehrere Betätigungselemente bzw. Schalter auf, um jeden der mehreren Teile des Tragesystems durch Schalten eines jeweiligen Betätigungselements unabhängig zu betätigen. Das Mittel zur Erzeugung einer Rückmeldung bzw. das Rückmeldesystem ist deshalb vorzugsweise zur Erzeugung einer für jeden Teil des Tragesystems individuellen Rückmeldung bei seiner Betätigung mit der Bedienungshilfe ausgebildet.

In einer bevorzugten Ausführungsform der Erfindung ist die Rückmeldung bzw. die Rückkopplung eine sinnesempfindliche Rückmeldung oder Rückkopplung, die vom

Benutzer bzw. Bedienungspersonal durch mindestens eine seiner Sinnesempfindungen wahrzunehmen ist bzw. wahrgenommen werden kann.

Die sinnesempfindliche Rückmeldung umfasst ein optisches Signal, welches vorzugsweise mittels Licht erzeugt wird. Das optische Signal könnte zum Beispiel darin bestehen, das ein Licht leuchtet. Zudem könnte das optische, bevorzugt mit Licht erzeugte Signal numerisch (z.B. Zahl der Lichte), farblich, oder blinkend (Art des Blinkens) kennzeichnend sein. Das Rückmeldesystem bzw. das Mittel zur Erzeugung einer Rückmeldung weist deshalb mindestens einen Leuchtkörper auf, der den Teil des Tragesystems bzw. das entsprechende Gelenk oder den entsprechenden Mechanismus örtlich am Stativ identifiziert bzw. kennzeichnet, typischerweise durch Beleuchtung. In dieser Weise kann der Benutzer (also, das Bedienungspersonal) auch bei sehr schlechten Lichtverhältnissen deutlich feststellen und wahrnehmen, welchen Teil des Tragesystems mit der Bedienungshilfe gerade betätigt wird. Dies wird ihm durch eine aktive optische Rückkopplungen aufgezeigt. Der mindestens eine Leuchtkörper wird vorzugsweise in oder an einer äußeren Verkleidung des entsprechende Gelenks oder Mechanismus angeordnet, bevorzugt mit einer transparenten Abdeckung bzw. Abdeckplatte. Auch mehrere Leuchtkörper können an eine Stelle bzw. in Verbindung mit einem einzigen Teil des Tragesystems angebracht werden. Jeder Leuchtkörper ist typischerweise elektrisch angesteuert und besteht bevorzugt aus einem oder mehreren Leuchtelementen, wie z.B. eine oder mehrere Leuchtdiode (LED), obwohl andere Arten von Leuchtkörper, die ansteuerbar sind, auch hiermit eingeschlossen sind.

In einer weiteren Ausführungsform dieser Erfindung kann die Rückmeldung auch ein akustisches Signal umfassen. Das akustische Signal könnte beispielsweise in Form eines vorbestimmten Tons oder sogar eines gesprochenen Worts sein. Auf jeden Fall dient es nochmals dazu, dem Benutzer bzw. dem Bedienungspersonal mitzuteilen, welchen Teil des Tragesystems gerade über die Bedienungshilfe betätigt wird.

In einer bevorzugten Ausführungsform der Erfindung hat das Tragesystem eine Steuereinheit, die derart eingestellt ist, dass sie bei einer Betätigung eines der jeweiligen

Betätigungselemente bzw. Schalter der Bedienungshilfe ein Schalten des jeweiligen Teils des Tragesystems vorerst verzögert oder unterbindet, bis die Rückmeldung bzw. Rückkopplung für den Benutzer erzeugt wurde. Diese Verzögerung bzw. Unterbindung könnte bspw. eine Zeit-Verzögerung von einigen (2 oder 3) Sekunden sein, in derer dem Benutzer die Rückmeldung übermittelt wird. Andererseits könnte diese Verzögerung bzw. Unterbindung erst durch eine zusätzliche (z.B. zweite) Betätigung des jeweiligen Betätigungselements bzw. Schalters überwunden werden. Auf dieser Weise hat der Benutzer Zeit, um die Rückmeldung vom Rückmeldesystem wahrzunehmen und zu verstehen, bevor den mit der Bedienungshilfe zu betätigenden Teil des Tragesystems tatsächlich betätigt wird. Falls der Benutzer den falschen Schalter bzw. das falsche Betätigungselement gewählt hat, hat er damit Zeit seinen Fehler zu erkennen und zu korrigieren, bevor den falschen Teil des Tragesystems betätigt wird. Vorzugsweise ist die Steuereinheit in der Bedienungshilfe integriert. In diesem Zusammenhang kann die Bedienungshilfe mit ihren Betätigungselementen bzw. Schaltern im oder am Stativ selbst eingebaut bzw. angeordnet sein. Alternativ oder zusätzlich kann die Bedienungshilfe als Fernbedienung gestaltet sein.

Gemäß einem weiteren Ausführungsform sieht diese Erfindung ein medizinisches Deckenstativ zum Tragen bzw. zum Stützen medizin-technischer Geräte in einem Behandlungsraum vor, mit
mindestens einem im Wesentlichen horizontal angeordneten Ausleger bzw. Arm und mindestens einer Tragsäule;
mindestens einem Drehgelenk und/oder mindestens einer Hebe- und Senkvorrichtung;
einem am Ausleger bzw. Arm angebrachten Stativkopf zur Aufnahme der medizin-technischen Geräte, und
einer Bedienungshilfe mit mindestens einem Betätigungselement zum Lösen bzw. Betätigen einer jeweiligen Bremse in dem mindestens einen Drehgelenk und/oder zum Betätigen der mindestens einen Hebe- und Senkvorrichtung,
Mitteln zur Erzeugung einer aktiven Rückmeldung, die die jeweilige, mit dem Betätigungselement korrelierende Bremse bzw. Hebe- und Senkvorrichtung für einen Benutzer beim Bedienen identifiziert bzw. kennzeichnet.

Die aktive Rückmeldung ist eine sinnesempfindliche Rückmeldung, welche besonders bevorzugt als optisches Signal erzeugt wird, mittels einer Lichtquelle. Wie oben bereits angegeben, kann das optische Signal auch farblich, blinkend oder numerisch kennzeichnend sein. Daher umfasst das Mittel zur Erzeugung einer aktiven Rückmeldung mindestens einen und bevorzugt mehrere Leuchtkörper, der bzw. die die entsprechende Bremse und/oder die entsprechende Hebe- und Senkvorrichtung identifizieren bzw. kennzeichnen kann bzw. können, typischerweise durch Beleuchtung. Der mindestens eine Leuchtkörper ist vorzugsweise örtlich am jeweiligen Teil des Stativs und bspw. in oder an einer äußeren Verkleidung des entsprechenden Gelenks oder der entsprechenden Hebe- und Senkvorrichtung angeordnet. Vorzugsweise wird jedes Drehgelenk und jede Hebe- und Senkvorrichtung bei einer jeweiligen Betätigung mit der Bedienungshilfe von der sinnesempfindlichen Rückmeldung individuell identifiziert bzw. gekennzeichnet.

In einer bevorzugten Ausführungsform der Erfindung umfasst die sinnesempfindliche Rückmeldung auch ein akustisches Signal, vorzugsweise mittels eines vorbestimmten Tons, weiter bevorzugt mittels gesprochener Worte.

### Kurze Beschreibung der Zeichnungen

Weitere bevorzugte Ausgestaltungen der Erfindung ergeben sich aus der nachfolgenden Beschreibung von Ausführungsbeispielen, die unter Bezugnahme auf die beigefügten Figuren erfolgt, wobei einander funktionsgleiche oder funktionsähnliche Bauteile mit denselben Bezugszeichen gekennzeichnet sind. Es zeigt:
- Figur 1: eine perspektivische Ansicht eines Tragesystems in Form eines medizinischen Deckenstativs gemäß einem Ausführungsbeispiel der Erfindung;
- Figur 2: eine perspektivische Ansicht des Stativkopfes bzw. der Konsole des erfindungsgemäßen Tragesystems in Figur 1.

### Beschreibung der Ausführungsbeispiele der Erfindung

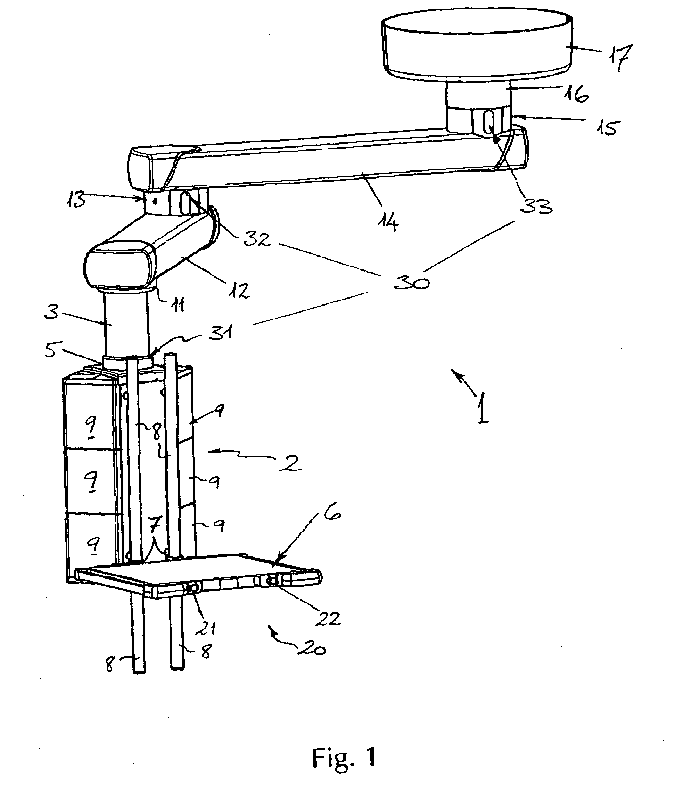

Die Figur 1 zeigt einen perspektivischen Gesamtüberblick einer Ausführungsform eines erfindungsgemäßen Deckenstativs 1 in einem Behandlungsraum (z.B. in einem OP-Saal oder Intensivraum) eines Krankenhauses. Dieses Deckenstativ 1 weist einen Stativkopf 2, der an einer vertikalen Säule 3 befestigt ist. Der Stativkopf 2 ist in Form einer Konsole zur Aufnahme und zur Versorgung von medizin-technischen bzw. medizin-elektrischen (ME) Endgeräte (nicht gezeigt). In diesem Zusammenhang weist der Stativkopf bzw. die Konsole 2 ein Traggestell 4 auf, das an der Säule 3 über eine entsprechende Aufnahmestelle bzw. zentrale Öffnung 5 an einer oberen Seite des Traggestells 4 montiert ist. Der Stativkopf bzw. die Konsole 2 umfasst mindestens ein Tablett 6 zum Aufnehmen der ME-Geräte, welches Tablett 6 mittels zwei Klemmbacken 7 höhenverstellbar an zwei sich vertikal erstreckenden Rohren 8 befestigt ist. Zudem hat die Konsole 2 seitlich angeordnete Module 9, die u. a. Anschlussdosen bzw. Steckeranschlüsse (nicht gezeigt) zur medizin-technischen Versorgung bzw. zur Entnahme von Gasen und/oder elektrischer Versorgungsströme sowie zur Herstellung elektronischer Kommunikationswege für die ME-Endgeräte beinhalten.

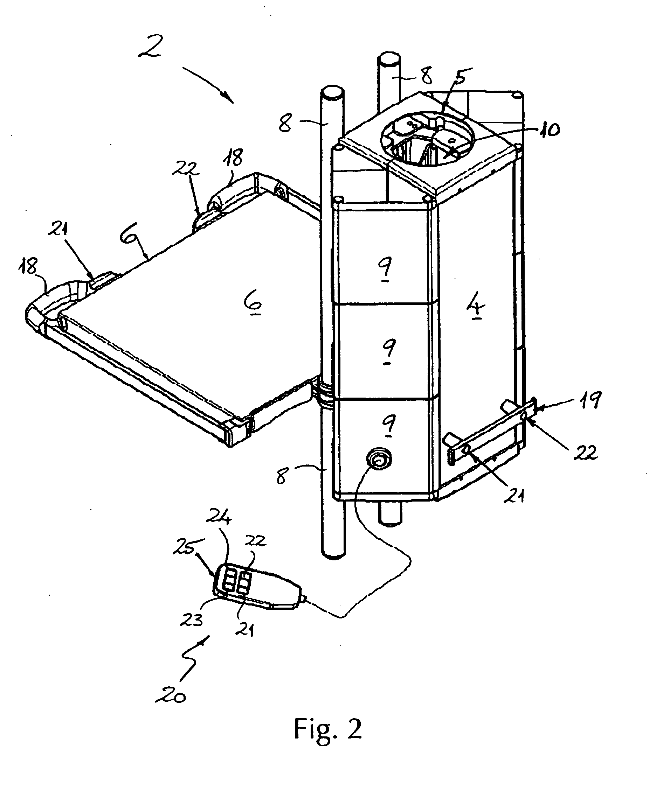

Mit Bezug nun auch auf die Figur 2 ist der Stativkopf 2 mit der Säule 3 über eine sich im Traggestell 4 der Konsole befindliche Hebe- und Senkvorrichtung 10 verbunden, mit der eine vertikale Höhenverstellung des Stativkopfes 2 motorisch steuerbar ist. Die Hebe- und Senkvorrichtung 10 ist innerhalb des Traggestells 4 angeordnet und mit Verkleidungselementen verkleidet, sodass sie von außen nicht sichtbar ist. Die Säule 3 ist wiederum drehbar über eine Drehverbindung 11 an einem horizontalen unteren schwenkbaren Arm 12 befestigt. Der untere Arm 12 ist über ein unteres Drehlager bzw. Drehgelenk 13 drehbar mit einem weiteren horizontalen oberen schwenkbaren Arm 14 verbunden und letzterer ist über ein oberes Drehlager bzw. Drehgelenk 15 und ein kurzes vertikales Säulenstück 16 an einer Decke mittels einer Deckenaufnahme 17 angebracht. Das untere und das obere Drehlager bzw. Drehgelenk 13, 15 ist jeweils mit einer elektromagnetischen Feststell- bzw. Friktionsbremse ausgestattet, die allerdings nicht sichtbar ist, weil die jeweiligen Drehverbindungen bzw. Feststellbremsen intern im Gelenk eingebaut und mit Verkleidungselementen verkleidet sind.

Auf der Vorder- und/oder Rückseite des Stativkopfes bzw. der Konsole 2 sind zwei Handgriffe 18, 19 vorgesehen, mit denen der Benutzer bzw. das Bedienungspersonal die Konsole 2 per Hand bewegen und positionieren kann. Ferner verfügt der Stativkopf 2 über eine Bedienungshilfe 20 mit Betätigungselemente bzw. Schalter 21-22 in der Form von Tasten zur Bedienung der elektromagnetischen Bremse der Drehlager bzw. Drehgelenke 13, 15, wobei durch Betätigung eines der Betätigungselemente bzw. Schalter 21, 22 eine entsprechende elektromagnetische Bremse gelöst wird, was dem Benutzer dann ein Verschwenken des Armes 12, 14 ermöglicht. Ebenfalls umfasst die Bedienungshilfe 20 eine Fernbedienung 25, die sowohl entsprechende Betätigungselemente bzw. Schalter 21, 22 für die Bremsen als auch Betätigungselemente bzw. Schalter 23, 24 ("Auf" & "Ab") in Form von Tasten für die vertikale Höhenverstellung des Stativkopfes 2 über die Hebe- und Senkvorrichtung 10 aufweist.

In der Praxis ergreift das Bedienungspersonal einen der Handgriffe 18, 19 des Stativkopfs 2 - z.B. mit beiden Händen - und drückt mit dem Daumen der linken oder der rechten Hand die gewünschte Taste des jeweiligen Betätigungselementes 21, 22. Dadurch wird die entsprechende elektromagnetische Feststellbremse im jeweiligen Drehlager bzw. Drehgelenk 13, 15 gelöst und das Drehlager bzw. Drehgelenk ist frei drehbar, so dass das Bedienungspersonal den Stativkopf 2 in die gewünschte Position schieben oder ziehen kann. Anschließend lässt es die Taste wieder los, so dass die Feststellbremse wieder arretiert wird. Der Stativkopf 2 ist dann in seiner neuen Position fixiert. Ähnlich funktioniert es mit der Fernbedienung 25 aber damit schiebt oder zieht der Benutzer den Stativkopf 2 mit nur einer Hand, denn er hält die Fernbedienung 25 typischerweise in der anderen Hand. Mit der Fernbedienung 25 hat er in diesem Beispiel auch eine größere Auswahl an Bewegungsmöglichkeiten und damit auch an Betätigungselemente bzw. Schalter 21-24.

Während der Betätigung eines der Betätigungselemente bzw. Schalter 21-24 der Bedienungshilfe 20 wird erfindungsgemäß ein Signal bzw. eine aktive Rückmeldung erzeugt, das bzw. die die korrelierende, mit dem Betätigungselement zu betätigende Bremse oder Hebe- und Senkvorrichtung für einen Benutzer beim Bedienen identifiziert bzw. kennzeichnet. Das Deckenstativ 1 weist Mittel 30 zur Erzeugung eines optischen Signals auf, welche Mittel 30 in der Form von aufleuchtenden Indikatoren 31-33 örtlich am Stativ 1 an den jeweiligen Stellen bzw. Gelenken 13, 15 vorgesehen sind. Jeder Indikator 31-33 weist einen Leuchtkörper (z.B. mit einer oder mehreren Leuchtdioden) auf, der in der Verkleidung des Stativs integriert und vorzugsweise mit einer licht-durchlässigen bzw. transparenten Abdeckung versehen ist. Wenn das Betätigungselement 22 zum Lösen der Feststellbremse im oberen Drehlager/Drehgelenk 15 vom Benutzer betätigt (gedruckt) wird, wird der Indikator 33 am oberen Drehlager/Drehgelenk 15 vom Rückmeldesystem beleuchtet, um dem Benutzer aufzuzeigen, dass die Bremse in diesem Lager 15 gerade gelöst wurde. Wenn das Betätigungselement 21 zum Lösen der Feststellbremse im unteren Drehlager/Drehgelenk 13 vom Benutzer betätigt (gedruckt) wird, wird der Indikator 32 am unteren Drehlager/Drehgelenk 13 beleuchtet, um dem Benutzer aufzuzeigen, dass die Bremse in diesem Lager 13 gerade gelöst wurde. Damit wird ein Signal mit aktiver Rückkopplung an das Bedienungspersonal erzeugt und gesendet, sodass das Personal sich vergewissern kann, dass der gewünschte Teil des Deckenstativs 1 über die Bedienungshilfe 20 betätigt wird. Falls der falsche Indikator 31-33 leuchten soll, kann das Personal die gedruckte Taste 21-24 loslassen und eine andere drucken.

Nach abschließender Positionierung und Nichtbetätigung der Betätigungselemente 21-24 bleibt das medizinische Deckenstativ 1 in der gewünschten Endposition über die Feststellbremsen fixiert. Ferner kann das Verschwenken motorisch, pneumatisch oder mit weiteren Verfahren unterstützt werden. Um die Funktionsweise der Betätigungselemente 21-24 der einzelnen Dreh-/ Lagerstellen des medizinischen Deckenstativs 1 zur Bewegung zu erleichtern, kann zusätzlich zur vorhandenen Indikatoren 31-33 eine optische Lichtquelle an den Lager-/ Drehstellen 13, 15 oder den angrenzenden Bauteilen vorgesehen

Der Erfindung liegt eine Entwicklung eines medizinischen Deckenstativs zu Grunde, welches an den vorhandenen Lager- bzw. Drehstellen rein elektromagnetisch durch eine integrierte Spannungsversorgung gebremst ist und beim Lösen der elektromagnetischen Bremse dem Benutzer/Bediener eine optische Rückkopplung (Signal) der gelösten Bremse der Lager-/ Drehstelle mittels Indikatoren aufzeigt. Bis zur Erfindung sind den Erfindern keine medizinische Deckenstative mit elektromagnetischen Lager- bzw. Drehstellen und integrierter Spannungsversorgung bekannt, welche eine optische Rückkopplung (Signal) bei Betätigung der Bremsschalter vorweisen. Einer der Vorteile der Erfindung ist, dass bei schlechten Lichtverhältnissen (z.B. in der Nacht an einer Intensivstation oder bei Notbeleuchtung) eine klare Zuordnung der Bedienungshilfe bzw. der Betätigungselemente trotzdem noch gegeben ist. Parallel weist das erfindungsgemäße medizinische Deckenstativ eine integrierte Spannungsversorgung mit elektromagnetischen Bremsen zur Ansteuerung jeder Lager-/ Drehstelle auf.

## Patentansprüche

1. Tragesystem zum Tragen bzw. zum Stützen medizin-technischer Geräte in einem Behandlungsraum, aufweisend
- ein Stativ, insbesondere ein Deckenstativ (1), zum Montieren im Behandlungsraum,
- mindestens ein Gelenk (13, 15) bzw. mindestens einen Mechanismus (10), mit dem das Stativ (1) im Behandlungsraum bewegbar ist,
- eine Bedienungshilfe (20) zur Betätigung mindestens eines Teils des Tragesystems, um eine Bewegung des Stativs (1) zu steuern, und
- ein Rückmeldesystem (30) zur Erzeugung eines Signals bzw. einer Rückmeldung über eine Betätigung des korrelierenden Teils des Tragesystems mit der Bedienungshilfe (20),
**dadurch gekennzeichnet, dass** das Rückmeldesystem (30) mindestens einen Leuchtkörper aufweist, der den Teil des Tragesystems bzw. das entsprechende Gelenk (13, 15) oder den entsprechenden Mechanismus (10) örtlich am Stativ an der jeweilige Stelle des Mechanismus bzw. am entsprechenden Gelenk identifiziert bzw. kennzeichnet, typischerweise durch Beleuchtung.

2. Tragesystem nach Anspruch 1, wobei der mindestens eine, mit der Bedienungshilfe (20) zu betätigende Teil des Tragesystems mit dem mindestens einen Gelenk bzw. Mechanismus (13, 15, 10) verbunden ist.

3. Tragesystem nach Anspruch 1 oder Anspruch 2, wobei der mindestens eine, mit der Bedienungshilfe (20) zu betätigende Teil des Tragesystems eine Bremse, vorzugweise eine elektromagnetische Bremse, umfasst, sodass die Bewegung des Stativs (1) durch Lösen oder Klemmen der Bremse mit der Bedienungshilfe (20) steuerbar ist.

4. Tragesystem nach einem der vorhergehenden Ansprüche, wobei der mindestens eine, mit der Bedienungshilfe (20) zu betätigende Teil des Tragesystems einen Elektromotor umfasst, sodass die Bewegung des Stativs (1) durch An- oder Absteuerung des Elektromotors mit der Bedienungshilfe steuerbar ist.

5. Tragesystem nach einem der vorhergehenden Ansprüche, wobei das Signal farblich, blinkend oder numerisch kennzeichnend ist.

6. Tragesystem nach einem der vorhergehenden Ansprüche, wobei der mindestens eine Leuchtkörper in oder an einer äußeren Verkleidung des entsprechende Gelenks (13, 15) oder Mechanismus (10) angeordnet ist.

7. Tragesystem nach einem der vorhergehenden Ansprüche wobei die Rückmeldung des Rückmeldesystems ein akustisches Signal umfasst, vorzugsweise mittels eines vorbestimmten Tons, weiter bevorzugt mittels gesprochener Worte.

8. Tragesystem nach einem der vorhergehenden Ansprüche, wobei das Tragesystem mehrere Gelenke bzw. mehrere Mechanismen (13, 15, 10) aufweist, mit denen das Stativ (1) im Behandlungsraum bewegbar ist, und wobei die Bedienungshilfe (20) zur Betätigung mehrerer Teile des Tragesystems geeignet bzw. gestaltet ist, um eine Bewegung des Stativs (1) zu steuern,
wobei das Rückmeldesystem (30) zur Erzeugung einer individuellen sinnesempfindlichen Rückmeldung für jeden korrelierenden Teil des Tragesystems bei einer Betätigung mit der Bedienungshilfe ausgebildet ist.

9. Tragesystem nach einem der vorhergehenden Ansprüche, wobei das Stativ ein medizinisches Deckenstativ (1) ist, mit mindestens einem im Wesentlichen horizontal angeordneten Ausleger bzw. Arm (12, 14) und mindestens einer Tragsäule (3, 16);
wobei das mindestens eine Gelenk (13, 15) bzw. der mindestens eine Mechanismus (10), mit dem das Stativ (1) im Behandlungsraum bewegbar ist, mindestens ein Drehgelenk (13, 15) und/oder mindestens eine Hebe- und Senkvorrichtung (10) ist;
wobei das medizinische Deckenstativ ferner einen an dem Ausleger bzw. Arm (12, 14) angebrachten Stativkopf (2) zur Aufnahme der medizintechnischen Geräte umfasst; und
wobei die Bedienungshilfe (20) mindestens ein Betätigungselement (1, 2) zum Lösen bzw. Betätigen einer jeweiligen Bremse in dem mindestens einen Drehgelenk und/oder zum Betätigen der mindestens einen Hebe- und Senkvorrichtung (10) umfasst.

10. Deckenstativ (1) nach Anspruch 9, wobei jedes Drehgelenk (13, 15) eine integrierte Spannungsversorgung mit elektromagnetischen Bremse zur Ansteuerung der Drehverbindung aufweist.

## Claims

1. Carry system for carrying or supporting medical-technical devices in a treatment room, comprising
- a support, in particular a ceiling support (1), for mounting in the treatment room,
- at least one joint (13, 15) or at least one mechanism (10), by which the support (1) can be moved in the treatment room,
- an operating aid (20) for operating at least one part of the carry system, in order to control a motion of the support (1), and
- a feedback system (30) for generation of a signal or a feedback of an operation of the correlating part of the carry system by the operating aid (20), **characterized in that** the feedback system (30) is provided with at least one luminous element which identifies or characterizes the part of the carry system or the corresponding joint (13, 15) or the corresponding mechanism (10) locally at the support at the respective position of the mechanism or at the corresponding joint, typically by illumination.

2. Carry system according to claim 1, wherein the at least one part of the carry system, which is to be operated by the operating aid (20), is connected with the at least one joint or mechanism (13, 15, 10).

3. Carry system according to claim 1 or 2, wherein the at least one part of the carry system, which is to be operated by the operating aid (20), comprises a brake, preferably an electromagnetic brake, such that the motion of the support (1) is controllable with the operating aid (20) by releasing or applying the brake.

4. Carry system according to one of the preceding claims, wherein the at least one part of the carry system, which is to be operated by the operating aid (20), comprises an electric motor, such that the motion of the support (1) is controllable with the operating aid (20) by activation or deactivation of the electric motor.

5. Carry system according to one of the preceding claims, wherein the signal is **characterizing in** terms of colour, **characterizing by** blinking or characterizing numerically.

6. Carry system according to one of the preceding claims, wherein the at least one luminous element is arranged in or at an outer panelling of the corresponding joint (13, 15) or mechanism (10).

7. Carry system according to one of the preceding claims, wherein the feedback of the feedback system (30) comprises an acoustic signal, preferably by means of a predefined sound, further preferably by means of spoken words.

8. Carry system according to one of the preceding claims, wherein the carry system is provided with several joints or several mechanisms (13, 15, 10), by which the support (1) can be moved in the treatment room, and wherein the operating aid (20) for operation of several parts of the carry system is adapted or configured for controlling a motion of the support (1),
wherein the feedback system (30) is arranged for generation of an individual sense-perceptive feedback for each correlating part of the carry system during an operation with the operating aid.

9. Carry system according to one of the preceding claims, wherein the support is a medical ceiling support (1), comprising at least one extension or arm (12, 14) arranged substantially horizontally and at least one supporting column (3, 16);
wherein the at least one joint (13, 15) or the at least one mechanism (10), by which the support (1) can be moved in the treatment room, is at least one pivot joint (13, 15) and/or at least one lifting and lowering device (10); wherein the medical ceiling support (1) further comprises a support head (2) mounted at the extension or arm (12, 14) for reception of the medical-technical devices; and
wherein the operating aid (20) comprises at least one operating element (1, 2) for releasing or operating a respective brake in the at least one pivot joint and/or for operating the at least one lifting and lowering device (10).

10. Ceiling support (1) according to claim 9, wherein each pivot joint (13, 15) is provided with an integrated power supply with an electromagnetic brake for controlling the rotary joint.

## Revendications

1. Système de support servant à supporter ou à soutenir des appareils techniques médicaux dans une salle de traitement, comprenant
- un support, en particulier un support suspendu au plafond (1), à monter dans la salle de traitement,
- au moins une articulation (13, 15) ou au moins un mécanisme (10) avec lequel le support (1) peut être déplacé dans la salle de traitement,
- une aide à la commande (20) servant à l'actionnement d'au moins une partie du système de support afin de commander un mouvement du support (1), et
- un système d'information en retour (30) servant à générer un signal ou une information en retour au sujet d'un actionnement de la partie en corrélation du système de support avec l'aide à la commande (20),
**caractérisé en ce que** le système d'information en retour (30) comprend au moins un corps lumineux qui identifie ou indique, typiquement par illumination, la partie du système de support ou l'articulation correspondante (13, 15) ou le mécanisme correspondant (10) localement sur le support à la position respective du mécanisme ou au niveau de l'articulation correspondante.

2. Système de support selon la revendication 1, dans lequel ladite au moins une partie du système de support à actionner avec l'aide à la commande (20) est reliée à ladite au moins une articulation ou audit au moins un mécanisme (13, 15, 10).

3. Système de support selon la revendication 1 ou 2, dans lequel ladite au moins une partie du système de support à actionner avec l'aide à la commande (20) comporte un frein, de préférence un frein électromagnétique, de sorte que le mouvement du support (1) puisse être commandé par desserrage ou serrage du frein avec l'aide à la commande (20).

4. Système de support selon l'une quelconque des revendications précédentes, dans lequel ladite au moins une partie du système de support à actionner avec l'aide à la commande (20) comporte un moteur électrique de sorte que le mouvement du support (1) puisse être commandé par une mise en marche ou une mise à l'arrêt du moteur électrique avec l'aide à la commande.

5. Système de support selon l'une quelconque des revendications précédentes, dans lequel le signal est indiqué d'une manière colorée, clignotante ou numérique.

6. Système de support selon l'une quelconque des revendications précédentes, dans lequel ledit au moins un corps lumineux est disposé dans ou sur un revêtement externe de l'articulation (13, 15) ou du mécanisme (10) correspondant.

7. Système de support selon l'une quelconque des revendications précédentes, dans lequel l'information en retour du système d'information en retour comporte un signal acoustique, de préférence au moyen d'une tonalité prédéfinie, de préférence spécifiquement au moyen de mots parlés.

8. Système de support selon l'une quelconque des revendications précédentes, dans lequel le système de support comprend plusieurs articulations ou plusieurs mécanismes (13, 15, 10) avec lesquels le support (1) peut être déplacé dans la salle de traitement, et dans lequel l'aide à la commande (20) est conçue ou appropriée pour l'actionnement de plusieurs parties du système de support afin de commander un mouvement du support (1),
dans lequel le système d'information en retour (30) est formé pour la génération d'une information en retour individuelle sensible aux sens pour chaque partie en corrélation du système de support lors d'un actionnement avec l'aide à la commande.

9. Système de support selon l'une quelconque des revendications précédentes, dans lequel le support est un support médical suspendu au plafond (1), avec au moins une flèche ou un bras (12, 14) disposé essentiellement à l'horizontale et avec au moins une colonne de support (3, 16) ;
dans lequel ladite au moins une articulation (13, 15) ou ledit au moins un mécanisme (10), avec lequel le support (1) peut être déplacé dans la salle de traitement, est au moins une articulation tournante (13, 15) et/ou au moins un dispositif de montée et de descendante (10) ;
dans lequel le support médical suspendu au plafond comporte en outre une tête porteuse (2) montée sur la flèche ou le bras (12, 14) et destinée à recevoir les appareils techniques médicaux ; et
dans lequel l'aide à la commande (20) comporte au moins un élément d'actionnement (1, 2) servant à desserrer ou à actionner un frein respectif dans ladite au moins une articulation tournante et/ou à actionner ledit au moins un dispositif de montée et de descente (10).

10. Support suspendu au plafond (1) selon la revendication 9, dans lequel chaque articulation tournante (13, 15) comprend une alimentation électrique intégrée avec un frein électromagnétique pour la commande de la liaison tournante.
